# Europäisches Patentamt
# European Patent Office
# Office européen des brevets

(19)

(11) Veröffentlichungsnummer: **0 513 081 B1**

(12)

# EUROPÄISCHE PATENTSCHRIFT

(45) Veröffentlichungstag der Patentschrift: **19.10.94**

(51) Int. Cl.⁵: **A01C 1/00**

(21) Anmeldenummer: **91903031.2**

(22) Anmeldetag: **31.01.91**

(86) Internationale Anmeldenummer:
**PCT/EP91/00181**

(87) Internationale Veröffentlichungsnummer:
**WO 91/11095 (08.08.91 91/18)**

(54) **VERFAHREN ZUR BEKÄMPFUNG VON SAMEN- UND/ODER BODENBÜRTIGEN SCHADERREGERN DURCH SAATGUTBEHANDLUNG.**

(30) Priorität: **31.01.90 DD 337419**
**31.01.90 DD 337418**

(43) Veröffentlichungstag der Anmeldung:
**19.11.92 Patentblatt 92/47**

(45) Bekanntmachung des Hinweises auf die
Patenterteilung:
**19.10.94 Patentblatt 94/42**

(84) Benannte Vertragsstaaten:
**DE DK FR GB NL SE**

(56) Entgegenhaltungen:
**WO-A-85/01878**
**DD-A- 238 715**
**DD-A- 250 456**
**US-A- 4 302 670**
**US-A- 4 633 611**

(73) Patentinhaber: **PFITZNER, Christian (als Gesellschafter der Gesellschaft für Umweltschutzberatung und -technik GbR)
Schänkestrasse 16**

**D-06502 Thale (DE)**

Patentinhaber: **HEINZMANN, Rainer (als Gesellschafter der Gesellschaft für Umweltschutzberatung und -technik GbR)
Johanneshöfer Trift 42a
D-06484 Ouedlinburg (DE)**

(72) Erfinder: **Burth, Ulrich
Im Kamp 72
14562 Kleinmachnow (DE)**
Erfinder: **Motte, Günter
Nansenstr. 18
14471 Potsdam (DE)**
Erfinder: **Müller, Petra
Winzerweg 13
14532 Kleinmachnow (DE)**
Erfinder: **Müller, Rainer
Winzerweg 13
14532 Kleinmachnow (DE)**
Erfinder: **Jahn, Marga
Grasweg 21
14532 Kleinmachnow (DE)**

EP 0 513 081 B1

Erfinder: **Lindner, Kerstin**
**Falkenhorst 12**
**14478 Potsdam (DE)**
Erfinder: **Pflaumbaum, Joachim**
**August-Bebel-Str. 52**
**38889 Blankenburg (DE)**
Erfinder: **Scholze, Friederun**
**Bockshornschanze 16**
**06484 Quedlinburg (DE)**
Erfinder: **Gaber, Klaus**
**Wolfshügelstr. 7**
**01324 Dresden (DE)**

(74) Vertreter: **Patentanwälte Grünecker, Kinkel-**
**dey, Stockmair & Partner**
**Maximilianstrasse 58**
**D-80538 München (DE)**

**Beschreibung**

Die vorliegende Erfindung betrifft ein Verfahren zur Saatgutbehandlung zur Bekämpfung von samen- und/oder bodenbürtigen Schaderregern. Das Verfahren nach der vorliegenden Erfindung ist zur Behandlung von landwirtschaftlichem, gärtnerischem oder forstlichem Saatgut vorgesehen, vorzugsweise für Getreide.

Es ist bekannt, durch chemische und physikalische Verfahren der Saatgutbehandlung vor der Aussaat Schaderreger, die samenübertragbar, d.h. oberflächlich am Samen anhaften und/oder innerhalb des Samens sich befinden und die bodenbürtig den keimenden Samen sowie die Jungpflanzen schädigen, zu bekämpfen. Insbesondere wird das Getreidesaatgut vor der Verwendung einer Beizung unterzogen, durch die die Ausbreitung derartiger Schaderreger verhindert bzw. eingeschränkt werden soll.

Bei der chemischen Behandlung des Saatgutes unter Einsatz chemischer Beizmittel ergeben sich allerdings zahlreiche Nachteile, wie z.B. Toxizität für Warmblüter, Resistenzerscheinungen bei Schaderregern nach Breitenanwendung der Beizmittel, phytotoxische Effekte an der Kulturpflanze, ungenügende Anhaftung des Beizmittels am Saatgut sowie die Belastung des Menschen und der Umwelt mit biologisch hochwirksamen chemischen Substanzen.

In Bezug auf physikalische Verfahren, bei denen das Saatgut bis zu einer für mikrobielle Schaderreger kritischen Temperatur durch Licht verschiedener Wellenlängen, Mikrowellen, Wasserdampf, Heißluft etc. erwärmt wird, hat lediglich die Warm- und Heißwasserbeize zeitweise eine größere Bedeutung erlangt; allerdings sind derartige Beizen verhältnismäßig schwer zu handhaben.

Die Anwendung hochenergetischer Strahlen ($\gamma$-Strahlen, Röntgenstrahlen) für die Bekämpfung mikrobieller Schaderreger ist am Saatgut nicht möglich, da die notwendige Bestrahlungsdosis für eine fungizide Wirkung für das Saatgut phytotoxisch bzw. mutagen ist.

Im Stand der Technik ist es bereits bekannt, für die Bekämpfung von Schaderregern das Saatgut einer Bestrahlung mit niederenergetischen Elektronen im Vakuum oder in freier Atmosphäre zu unterziehen (DD-PS 242 337, DD-PS 238 715, US-PS 4 633 611). Hierbei werden die Elektronenenergie und die Strahlendosis so bemessen, daß mikrobielle Schaderreger abgetötet werden, ohne daß ertragbeeinflussende oder phytotoxische Effekte am Keim der Samenkörner auftreten. Dieses Verfahren ist insofern vorteilhaft, als von dem auf diese Weise behandelten Saatgut keine nachfolgende Gefährdung von Personen bei der Aussaat ausgeht und die Umwelt nicht mit toxischen Substanzen belastet wird. Die Bestrahlung mit niederenergetischen Elektronen hat sich allerdings insofern als unzureichend erwiesen, als samenübertragbare Schaderreger in tieferen Schichten des Samenkornes und im Keim des Samens nicht oder nur teilweise und unzureichend erfaßt werden und daß das Saatgut nach der Aussaat dem Befall mit bodenbürtigen Schaderregern ungehindert und schutzlos ausgesetzt ist.

In jüngerer Zeit sind zunehmend biologische Bekämpfungsverfahren gegen pilzliche Schaderreger mittels mikrobieller Antagonisten vorgeschlagen worden (vgl. z.B. DD-PS 250 456, EP-A-304178, US-PS 4 798 723 etc.). In diesem Zusammenhang ist auch bereits der Einsatz von mikrobiellen Antagonisten gegen verschiedene samen- und bodenbürtige pilzliche Schaderreger vorgeschlagen worden. Dabei kommen bakterielle Antagonisten, wie z.B. Bacillus spp., Streptomyces spp., Pseudomonas spp., Penicillium spp., Trichoderma spp., u.a. zum Einsatz. Allerdings haben sich die unter Laborbedingungen bei optimalen Temperaturen von über 20 °C aufgefundenen guten fungiziden Wirkungen dieser Antagonisten beim Übergang zur praktischen Anwendung im Freiland nicht in jedem Fall bestätigt und es treten erhebliche Wirkungsunsicherheiten auf.

Zur Verbesserung der Wirksamkeit ist es daher bekannt, mikrobielle Antagonisten mit Fungiziden zu vermischen und diese Gemische zur Saatgutbehandlung zu verwenden (vgl. z.B. DE-OS 23 52 403, DE-OS 27 40 052, DD-PS 26 74 420).

Der Erfindung liegt daher die Aufgabe zugrunde, ein Verfahren zur Saatgutbehandlung anzugeben, das es in umweltverträglicher Weise ermöglicht, samenbürtige Schaderreger des Saatgutes auch dann wirkungsvoll zu bekämpfen, wenn diese tiefere Bereiche des Saatgutes bzw. Samenkornes besiedeln, und welches das Saatgut bzw. die Samenkörner auch nach der Aussaat, insbesondere von der Phase der Keimung bis zur vollentwickelten Jungpflanze, wirksam vor dem Befall mit bodenbürtigen Schaderregern schützt.

Diese Aufgabe wird erfindungsgemäß dadurch gelöst, daß das Saatgut nach einer Bestrahlung mit niederenergetischen Elektronen einer Applikation antagonistischer Mikroorganismen gegen pilzliche Schaderreger und/oder fungizider Wirkstoffe unterzogen wird.

Überraschenderweise wurde gefunden, daß durch eine Kombination der Bestrahlung von Saatgut mit niederenergetischen Elektronen und anschließender Anwendung antagonistischer Mikroorganismen und/oder deren Kulturlösungen, Kulturfiltraten oder antibiotischen Stoffwechselprodukten am Saatgut eine synergistische Wirkung gegen samen- und bodenbürtige Schaderreger ohne ertragsbeeinflussende phytotoxische Effekte erreicht wird. Durch das erfindungsgemäße Verfahren wird eine vorteilhafte Prädisposition für eine wesentlich bessere Besiedelung des Saatgutes mit erfindungsgemäß eingesetzten Mikroorganismen bzw. eine dauerhafte Anlagerung von Kulturfiltraten oder antibiotischen Stoffwechselprodukten am Saatgut geschaffen. Gegebenenfalls können in Verbindung mit der Elektronenstrahlbehandlung auch fungizide Wirkstoffe für sich oder in Verbindung mit mikrobiellen Antagonisten oder Synergisten verwendet werden.

In einer bevorzugten Ausführungsform der vorliegenden Erfindung wird die Behandlung des Saatgutes mit einer chemischen und/oder biologischen Applikation unmittelbar im Anschluß an die Bestrahlung des Saatgutes mit niederenergetischen Elektronen in einem kontinuierlichen Prozeßablauf vorgenommen, wobei auf diese Weise eine hohe Saatgutdurchsatzleistung und eine besonders gleichmäßige Behandlung des Saatgutes gewährleistet wird.

Es ist andererseits auch möglich, die biologische und/oder chemische Applikation des mit niederenergetischen Elektronen behandelten Saatgutes erst vor bzw. während einer Aussaat vorzunehmen. Letzteres kann insbesondere dann von Vorteil sein, wenn die eingesetzten antagonistischen Bakterien und/oder Pilze eine besonders hohe Wirksamkeit an dem Elektronen behandelten Saatgut in einem engeren zeitlichen Bereich nach der Anwendung am Saatgut zeigen.

Gemäß einem weiteren, bevorzugten Ausführungsbeispiel der vorliegenden Erfindung wird das Saatgut einer Bestrahlung mit niederenergetischen Elektronen und einer Applikation antagonistischer Bakterien und/oder Pilzen unterzogen, die auf der Oberfläche des Saatgutes bzw. Samens und/oder im oberflächennahen und/oder tieferen Bereich des Saatgutkornes bzw. Samenkornes verbleiben und/oder einen Oberflächenbereich des Hypokotyls des Saatgut- bzw. Samenkornes besiedeln und/oder die Wurzelassoziationen sowie Symbiosen mit einer aus dem Samen hervorgehenden Keimpflanze eingehen und/oder die Mykorrhizen ausbilden.

In Abhängigkeit von der Art des Saatgutes und der Schaderregerzielgruppe sowie der in Abhängigkeit hiervon verwendeten mikrobiellen Antagonisten oder Synergisten wird bevorzugt, daß antagonistische Mikroorganismen und Mykorrhizapilze als wachsende Zelle oder in ihrer Dauerform in Verbindung mit Trägersubstraten an dem Saatgut verwendet werden.

Es wird andererseits auch bevorzugt, antagonistische Mikroorganismen und Mikorrhizepilze als Kulturlösungen zu verwenden oder bakterielle und pilzliche Antagonisten sowie zusätzlich ihre Kulturfiltrate und Stoffwechselprodukte als Applikation an dem elektronenbestrahlten Saatgut zu verwenden.

Vorzugsweise erfolgen die antagonistischen Aktivitäten in einem Temperaturbereich von 0,5 bis 35°C, insbesondere in einem Bereich von 6 bis 15°C.

Für die biologische Behandlung mit mikrobiellen Antagonisten haben sich bei Weizenkörnern besonders antagonistische Bakterien bewährt, die unter den Hinterlegüngszeichen IMET 11424, IMET 11425, IMET 11426, IMET 11427, IMET 11428 bei der amtlichen Hinterlegungsstelle Nationale Sammlung von Mikroorganismen, Institut für Mikrobiologie und experimentelle Therapie (IMET), Beutenbergstraße 11, 0-6900 Jena, DE, hinterlegt worden sind (vormals Zentralinstitut für Mikrobiologie und experimentelle Therapie der Akademie der Wissenschaften der DDR, DDR-6900 Jena, Beutenbergstraße 11).

Die Hinterlegung der Stämme IMET 11424 und IMET 11 425 erfolgte am 18.12.1989, die der Stämme IMET 11 426-28 am 19.12.1989.

Die Hinterlegung der Stämme IMET 43920, IMET 43921 und IMET 43922 erfolgte am 19.12.1989.

Die Hinterlegung der Stämme IMET 43923 und IMET 43924 erfolgte am 05.01.1990 und 15.01.1990.

In Verbindung mit den vorgenannten Bakterien oder für sich haben sich als mikrobielle Applikation auch insbesondere die antagonistischen Pilze, die bei der vorgenannten amtlichen Hinterlegungseinrichtung IMET unter den Bezeichnungen IMET 43920, IMET 43921, IMET 43922, IMET 43923, IMET 43924 hinterlegt worden sind, als wirksam erwiesen. Vorzugsweise werden die vorgenannten antagonistischen Bakterien und/oder antagonistischen Pilze in einer Konzentration von $10^4$ bis $5 \times 10^{10}$ cfu/ml oder g eingesetzt.

Untersuchungen haben gezeigt, daß eine besonders wirksame Schaderregerbekämpfung erfolgt, wenn die mikrobiellen Applikationsformen in einer Menge von 10 bis 500 ml oder g pro 100 kg Saatgut zur Anwendung kommen.

Bei den erfindungsgemäß eingesetzten Bakterien und/oder Pilzen mit antagonistischen Effekten gegen samen- und bodenbürtige Schaderreger, die in Kombination mit der Behandlung des Saatgutes mit niederenergetischen Elektronen an diesem angewandt werden, handelt es sich um solche, die auf der Samenoberfläche bzw. im oberflächennahen Bereich des Samens verbleiben, um Mikroorganismen, die den Oberflächenbereich der Hypokotyle besiedeln, um Mikroorganismen, die Wurzelassoziationen mit den Wurzeln der Jungpflanzen ausbilden oder um symbiontische Mikroorganismen bzw. Mykorrhizapilze.

Die Elektronenstrahlbehandlung des Saatgutes schafft besonders günstige Voraussetzungen für den anschließenden Besatz bzw. die Anlagerung von antagonistischen Mikroorganismen, deren Kulturlösungen, Kulturfiltraten oder antibiotischen Stoffwechselprodukten und sichert damit eine besondere Effizienz der Saatgutbehandung.

Die mikrobielle Behandlung des Saatgutes wird vorzugsweise in integraler Verfahrensführung im Anschluß an die vorangehende Bestrahlung des Saatgutes mit niederenergetischen Elektronen vorgenommen. Im Rahmen der vorliegenden Erfindung ist es jedoch auch möglich, die Ansiedlung von Bakterien und/oder Pilzen mit antagonistischen Effekten erst unmittelbar vor bzw. während der Aussaat des mit niederenergetischen Elektronen behandelten Saatgutes vorzunehmen.

Durch die Kombination der Bestrahlung des Saatgutes mit niederenergetischen Elektronen sowie der Applikation chemischer Wirkstoffe und/oder biologischen Materials, insbesondere antagonistisch wirkender Organismen, wurden überraschenderweise wesentlich bessere Bekämpfungserfolge bei der Schaderregerbekämpfung erzielt, als dies bei einer jeweils ausschließlichen Behandlung des Saatgutes mit antagonistisch wirkenden Organismen oder der Bestrahlung mit niederenergetischen Elektronen der Fall war.

Die besonderen Vorteile der vorliegenden Erfindung, die zu wesentlich besseren Bekämpfungserfolgen bei einem breiteren Wirkungsspektrum führt, liegen darin, daß durch die Kombination der Bestrahlung des Saatgutes mit niederenergetischen Elektronen mit der anschließenden Anlagerung von antagonistischen Mikroorganismen eine schnelle und ungehinderte Besiedelung des Saatgutes durch die mikrobiellen Organismen erfolgt, so daß eine hohe antagonistische Aktivität ausgebildet wird.

Die nach der vorliegenden Erfindung eingesetzten Kulturfiltrate bzw. antibiotischen Stoffwechselprodukte zeigen eine hohe und lang anhaltende Aktivität auf bzw. in dem Saatgut.

Im Rahmen der vorliegenden Erfindung wird bevorzugt, Mikroorganismen einzusetzen, die ihre antagonistische Aktivität in einem breiten Temperaturbereich von 0,5 bis 35°C, vorzugsweise jedoch von 6 bis 15°C, entfalten. Die Applikation biologischen Materials in Verbindung mit der Bestrahlung des Saatgutes mit niederenergetischen Elektronen hat den Vorzug, daß die erfindungsgemäß eingesetzten Organismen und ihre Applikationsformen keine umweltbelastenden Einflüsse ausüben, da es sich hierbei um Bodenmikroorganismen und Pilze handelt, die ohnehin auf landwirtschaftlich oder gärtnerisch genutztem Kulturland natürlich vorkommen.

Als besonders vorteilhaft zur Verwendung im Rahmen des erfindungsgemäßen Verfahrens der Saatgutbehandlung haben sich mikrobielle Antagonisten wie Bacillus spp., Pseudomonas spp., Trichoderma spp., Chaetomium spp., Epicoccum spp., Penicillium spp. (IMET 11424, IMET 11425, IMET 11426, IMET 11427, IMET 11428, IMET 43920, IMET 43921, IMET 43922, IMET 43923, IMET 43924), hefeartige Mikroorganismen und andere bekannte Antagonisten gegen pilzliche Schaderreger herausgestellt (Hinterlegungsstelle und -datum siehe vorher).

Im Rahmen des vorliegenden Verfahrens wird bevorzugt, daß, unmittelbar im Anschluß an die Bestrahlung des Saatgutes mit niederenergetischen Elektronen im Vakuum, entweder lebende Zellen, Sporen oder Stoffwechselprodukte als Kulturfiltrate direkt oder Zusammensetzungen auf der Basis von lebenden Zellen, Sporen oder Stoffwechselprodukten von verschiedenen Antagonisten auf das Saatgut aufgebracht werden. Beim Einsatz von lebenden Zellen und/oder Sporen werden $10^4$ bis $5 \times 10^{10}$ cfu/ml oder g der Applikationsform angewandt. Die verschiedenen Applikationsformen werden vorzugsweise mit einer Menge von 10 bis 500 ml oder g pro 100 kg Saatgut eingesetzt. Die Applikationsformen können neben üblichen Trägermaterialien Nährstoffe für die verwendeten Bakterien und/oder Pilze zur Verbesserung der Besiedelung des Samenkornes sowie Haftmittel enthalten.

Im Rahmen des erfindungsgemäßen Verfahrens können ferner in Verbindung mit den mikrobiellen Antagonisten oder anstelle derselben auch fungizide Wirkstoffe in Verbindung mit einem Elektronenbeizen eingesetzt werden.

Die Erfindung wird nachstehend anhand von Ausführungsbeispielen näher erläutert. Diese beziehen sich auf die Behandlung von Getreidesaatgut mit biologischem Material im Anschluß an die Bestrahlung des Saatgutes mit niederenergetischen Elektronen im Vakuum. Die Effizienz des erfindungsgemäßen Verfahrens zur Bekämpfung von Schaderregern durch Saatgutbehandlung unter Anwendung von Bakterien und Pilzen nach der Bestrahlung des Saatgutes mit niederenergetischen Elektronen ist in vitro und in vivo nachgewiesen.

Beispiel 1

Besiedelung von Saatgut mit antagonistischen Mikroorganismen

Weizenkörner der Sorte "Miras" wurden mit antagonistischen Mikroorganismen (fluoreszierender Pseudomonad IMET 11426 und Trichoderma-Stamm IMET 43922) direkt und im Anschluß an die Bestrahlung mit niederenergetischen Elektronen besiedelt. Die Bestrahlung des Saatgutes erfolgte dabei vorzugsweise in der Weise, wie dies in der DD-PS 242 337 dargestellt ist. Der Inhalt dieser Druckschrift wird hierdurch durch ausdrückliche Inbezugnahme mit zum Gegenstand der Offenbarung der vorliegenden Anmeldung gemacht.

Bei der Besiedelung wurden auf die Weizenkörner der fluoreszierende Pseudomonad IMET 11426 mit $10^7$ cfu/ml und der Trichoderma-Stamm IMET 43922 mit $10^7$ cfu/ml bei einem Flüssigkeitsaufwand von 4 l/100 kg Saatgut appliziert. Nach 3 Tagen wurde die Besiedelung der beiden Saatgutmengen mit antagonistischen Mikroorganismen unter erdfeuchten Bedingungen überprüft. Auf der Saatgutmenge, auf der nach Behandlung mit niederenergetischen Elektronen der fluoreszierende Pseudomonad IMET 11426 appliziert worden war, konnte eine Überlebensrate von $2 \times 10^7$ cfu/ml und auf der Saatgutmenge, auf der der Trichoderma-Stamm IMET 43922 im Anschluß an eine Bestrahlung der Saatgutmenge mit niederenergetischen Elektronen appliziert worden war, konnte eine Überlebensrate von $10^5$ cfu/ml nachgewiesen werden. Dem stehen auf Weizenkörnern, die ohne Bestrahlung durch niederenergetische Elektronen der obigen Besiedelung mit Antagonisten Mikroorganismen unterzogen worden waren, Überlebensraten von $10^5$ cfu/ml (fluoreszierender Pseudomonad) bzw. $10^3$ cfu/ml (Trichoderma-Stamm) gegenüber.

Beispiel 2

Bekämpfung samenbürdiger Schaderreger

Weizenkörner der Sorte "Miras" wurden im Vakuum mit niederenergetischen Elektronen (55 keV, 6 kGy) bestrahlt und es wurde im Anschluß an die Elektronenbestrahlung auf die Weizenkörner auf eine Kontrolle ein Bacillus sp. (IMET 11427) mit $5 \times 10^7$ cfu/ml und auf eine andere, bestrahlte Kontrolle eine Trichoderma-Sporensuspension (IMET 43923) mit $10^7$ cfu/ml mit einem Flüssigkeitsaufwand von 4 l/100 kg Saatgut unter Laborbedingungen appliziert.

Nach der Keimung des Saatgutes wurde ermittelt, wie pilzliche Schaderreger aus tieferen Schichten des Samenkornes bekämpft wurden. In der unbehandelten Kontrolle mit Elektronenbestrahlung keimten 86% der Körner normal ohne Pilzbefall und 14% anormal bzw. nicht gekeimte Körner waren durch pilzliche Schaderreger befallen. Nach dem Einsatz des Bacillus sp. keimten 93% der Körner normal und von den nicht bzw. anormal gekeimten Körnern waren nur noch 5% der Körner durch pilzliche Schaderreger befallen. Im anderen Fall keimten in der mit Trichoderma-Sporensuspension behandelten Kontrolle 94% der Körner normal und von den nicht bzw. anormal gekeimten Körnern waren 4% mit pilzlichen Schaderregern befallen.

Beispiel 3

Schutz des keimenden Samenkornes und der Keimpflanze vor Schaderregerbefall

Weizenkörner der Sorte "Alcedo" wurden gemäß obigem Beispiel 1 behandelt und auf den Körnern gemäß Beispiel 1 wurden verschiedene Bakterien (IMET 11424, IMET 11425, IMET 11426, IMET 11427, IMET 11428) und Pilze (IMET 43920, IMET 43921, IMET 43922, IMET 43923, IMET 43924) angesiedelt. Diese Weizenkörner wurden auf Malzmedien in unmittelbarer Nähe von ausgestanzten Agarscheiben, die mit verschiedenen Schaderregern bewachsen waren, ausgelegt. Die Beurteilung der antagonistischen Effekte der eingesetzten Bakterien und Pilze bei 10°C erfolgte nach vierwöchiger Versuchsdauer. Aus der Tabelle 1 ist zu entnehmen, daß die eingesetzten antagonistischen Mikroorganismen an Weizenkörnern nach Behandlung mit niederenergetischen Elektronen den Befall der keimenden Körner und der Keimpflanze mit bodenbürtigen Schaderregern wirksam verhindern und zu einer wesentlich höheren Effizienz der Bekämpfung führen, als dies durch eine alleinige Saatgutbehandlung mit niederenergetischen Elektronen möglich ist.

Tabelle 1: Effekte der Besiedelung mit antagonistischen Mikroorganismen an Weizenkörnern nach Behandlung mit niederenergetischen Elektronen

| Schaderreger | Weizenkörner nach Behandlung mit niederenergetischen Elektronen | | | | | | | | | | |
|---|---|---|---|---|---|---|---|---|---|---|---|
| | ohne Besiedelung | 1 | 2 | 3 | 4 | 5 | 6 | 7 | 8 | 9 | 10 |
| Fusarium avenaceum | T | ++ | ++ | ++ | +++ | ++ | + | + | + | +++ | + |
| Fusarium culmorum | T | ++ | ++ | ++ | +++ | ++ | + | + | + | +++ | + |
| Fusarium graminearum | T | ++ | ++ | -,0 | +++ | -,0 | + | + | -,0 | +++ | + |
| Microdochium nivale | T | ++ | ++ | + | +++ | ++ | + | + | + | + | + |
| Septoria nodorum | G | nu | nu | nu | nu | nu | + | + | + | +++ | + |
| Drechslera teres | G | ++ | ++ | ++ | nu | ++ | + | ++ | + | +++ | + |
| Gaeumannomyces graminis | G | ++ | ++ | ++ | +++ | +++ | + | +++ | ++ | +++ | + |

1...5 bakterielle Antagonisten (IMET 11425, IMET 11427, IMET 11424, IMET 11426, IMET 11428)

6...10 pilzliche Antagonisten (IMET 43921, IMET 43923, IMET 43922, IMET 43920, IMET 43924)

Legende:
nu = nicht untersucht
+++ = starke Hemmung mit deutlicher Hemmzone
++ = Hemmung mit deutlicher Hemmzone
+ = Wachstumsstop des Schaderregers ohne Hemmzone
- = keine Effekte
T = Samenkorn bzw. Keimpflanze abgestorben
G = Samenkorn bzw. Keimpflanze überwachsen und geschädigt

**Patentansprüche**

1. Verfahren zur Saatgutbehandlung zur Bekämpfung von samenund/oder bodenbürtigen Schaderregern, **dadurch gekennzeichnet,** daß das Saatgut nach einer Bestrahlung mit niederenergetischen Elektro-

EP 0 513 081 B1

nen einer Applikation antagonistischer Mikroorganismen gegen pilzliche Schaderreger und/oder fungizider Wirkstoffe unterzogen wird.

2. Verfahren nach Anspruch 1, **dadurch gekennzeichnet,** daß die Behandlung des Saatgutes mit antagonistischen Mikroorganismen gegen pilzliche Schaderreger und/oder fungiziden Wirkstoffen unmittelbar im Anschluß an die Bestrahlung des Saatgutes mit niederenergetischen Elektronen in einem kontinuierlichen Prozeßablauf vorgenommen wird.

3. Verfahren nach Anspruch 1, **dadurch gekennzeichnet,** daß das mit niederenergetischen Elektronen bestrahlte Saatgut vor bzw. während einer Aussaat der Behandlung mit antagonistischen Mikroorganismen gegen pilzliche Schaderreger und/oder fungiziden Wirkstofffen unterzogen wird.

4. Verfahren nach zumindest einem der vorhergehenden Ansprüche 1 bis 3, **dadurch gekennzeichnet,** daß das Saatgut einer Bestrahlung mit niederenergetischen Elektronen und einer Applikation antagonistischer Bakterien und/oder Pilze, die auf der Oberfläche des Saatgutes und/oder im oberflächennahen und/oder tieferen Bereich des Saatgutkornes verbleiben und/oder einen Oberflächenbereich des Hypokotyls des Saatgutkornes bzw. Samenkornes besiedeln und/oder die Wurzelassoziationen sowie Symbiosen mit einer aus dem Saatgut hervorgehenden Keimpflanze eingehen und/oder die Mykorrhizen ausbilden, unterworfen werden.

5. Verfahren nach zumindest einem der vorhergehenden Ansprüche 1 bis 4, **dadurch gekennzeichnet,** daß antagonistische Mikroorganismen als wachsende Zelle oder in ihrer Dauerform in Verbindung mit Trägersubstraten verwendet werden.

6. Verfahren nach Anspruch 5, **dadurch gekennzeichnet,** daß antagonistische Mikroorganismen als wachsende Zellen oder in ihrer Dauerform an Trägersubstanzen, gebunden mit Nährstoffen und/oder Haftmitteln, verwendet werden.

7. Verfahren nach zumindest einem der Ansprüche 5 oder 6, **dadurch gekennzeichnet,** daß antagonistische Mikroorganismen als Kulturlösungen verwendet werden.

8. Verfahren nach zumindest einem der vorhergehenden Ansprüche 5 bis 7, **dadurch gekennzeichnet,** daß bakterielle und pilzliche Antagonisten sowie zusätzlich ihre Kulturfiltrate und Stoffwechselprodukte verwendet werden.

9. Verfahren nach zumindest einem der vorhergehenden Ansprüche 1 bis 8, **dadurch gekennzeichnet,** daß die antagonistischen Aktivitäten in einem Temperaturbereich von 0,5 bis 35°C, insbesondere von 6 bis 15°C, erfolgen.

10. Verfahren nach zumindest einem der vorhergehenden Ansprüche 1 bis 9, **dadurch gekennzeichnet,** daß antagonistische Bakterien (IMET 11424, IMET 11425, IMET 11426, IMET 11427, IMET 11428) und/oder antagonistische Pilze (IMET 43920, IMET 43921, IMET 43922, IMET 43923, IMET 43924) mit $10^4$ bis 5 x $10^{10}$ cfu/ml oder g eingesetzt werden.

11. Verfahren nach zumindest einem der vorhergehenden Ansprüche 1 bis 10, **dadurch gekennzeichnet,** daß 10 bis 500 ml oder g der Applikationsformen pro 100 kg Saatgut zur Anwendung kommen.

**Claims**

1. Method of treating seed to control seed- and/or soil-borne pathogens, **characterized in that** the seed, after an irradiation with low-energy electrons, is subjected to an application of microorganisms antagonistic to fungal pathogens and/or of fungicidal agents.

2. Method according to claim 1, **characterized in that** the treatment of the seed with microorganisms antagonistic to fungal pathogens and/or with fungicidal agents is effected immediately after irradiation of the seed with low-energy electrons in one continuous process.

8

EP 0 513 081 B1

3. Method according to claim 1, **characterized in that** the seed, having been irradiated with low-energy electrons, is subjected to the treatment with microorganisms antagonistic to fungal pathogens and/or with fungicidal agents prior to or during sowing.

4. Method according to at least one of the preceding claims 1 to 3, **characterized in that** the seed is subjected to an irradiation with low-energy electrons and an application of antagonistic bacteria and/or fungi, which remain on the surface of the seed and/or in the superficial and/or deeper region of the seed grain and/or inhabit a superficial region of the hypocotyl of the seed grain or caryopsis and/or which enter into root associations and symbioses with a shoot originating from the seed and/or which develop mycorrhizas.

5. Method according to at least one of the preceding claims 1 to 4, **characterized in that** antagonistic microorganisms are used in the form of a growing cell or in their resting form in combination with carrier substrates.

6. Method according to claim 5, **characterized in that** antagonistic microorganisms are used in the form of growing cells or in their resting form on carrier substances, combined with nutrients and/or deposit builders.

7. Method according to at least one of claims 5 or 6, **characterized in that** antagonistic microorganisms are used in the form of nutrient broths.

8. Method according to at least one of the preceding claims 5 to 7, **characterized in that** bacterial and fungal antagonists and, in addition, their culture filtrates and metabolic products are used.

9. Method according to at least one of the preceding claims 1 to 8, **characterized in that** the antagonistic activities occur in a temperature range of 0.5 to 35°C, in particular of 6 to 15°C.

10. Method according to at least one of the preceding claims 1 to 9, **characterized in that** antagonistic bacteria (IMET 11424, IMET 11425, IMET 11426, IMET 11427, IMET 11428) and/or antagonistic fungi (IMET 43920, IMET 43921, IMET 43922, IMET 43923, IMET 43924) are used in a concentration of $10^4$ to $5 \times 10^{10}$ cfu/ml or g.

11. Method according to at least one of the preceding claims 1 to 10, **characterized in that** 10 to 500 ml or g of the application forms are used per 100 kg of seed.

**Revendications**

1. Procédé de traitement des semences pour combattre des agents pathogènes parasites des semences et/ou du sol, caractérisé par le fait qu'après irradiation par des électrons de faible énergie on soumet les semences à une application de micro-organismes antagonistes à l'égard des agents pathogènes fongoïdes et/ou d'agents fongicides.

2. Procédé selon la revendication 1, caractérisé par le fait que le traitement des semences par des micro-organismes antagonistes à l'égard des agents pathogènes fongoïdes et/ou par des agents fongicides se fait immédiatement à la suite de l'irradiation des semences par des électrons de faible énergie, en un déroulement continu du processus.

3. Procédé selon la revendicaiton 1, caractérisé par le fait qu'avant ou pendant un ensemencement, on soumet les semences, irradiées par des électrons de faible énergie, au traitement par des micro-organismes antagonistes à l'égard des agents pathogènes fongoïdes et/ou par des agents fongicides.

4. Procédé selon au moins l'une des revendications précédentes 1 à 3, caractérisé par le fait que l'on soumet les semences à une irradiations par les électrons de faible énergie et à une application de bactéries antagonistes et/ou de champignons qui subsistent sur la surface des semences et/ou dans la zone proche de la surface et/ou plus profonde de la graine et/ou colonisent une zone de surface de l'hypocotyle de la graine ou de la semence et/ou interviennent dans des associations de racine ou des symbioses avec une plante en germination sortant de la semence et/ou forment des mycorhizes.

9

5. Procédé selon au moins l'une des revendications 1 à 4, caractérisé par le fait que l'on emploie des micro-organismes antagonistes sous forme de cellule en croissance ou sous leur forme permanente en liaison avec des substrats supports.

6. Procédé selon la revendication 5, caractérisé par le fait que l'on emploie des micro-organismes antagonistes sous forme de cellules en croissance ou sous leur forme permanente sur des substances supports, liés à des produits nutritifs et/ou à des agents d'adhérence.

7. Procédé selon au moins l'une des revendications 5 ou 6, caractérisé par le fait que l'on emploie des micro-organismes antagonistes sous forme de solutions de culture.

8. Procédé selon au moins l'une des revendications précédentes 5 à 7, caractérisé par le fait que l'on emploie des antagonistes bactériens et fongoïdes ainsi qu'en outre leurs filtrats de culture et les produits de leur métabolisme.

9. Procédé selon au moins l'une des revendications précédentes 1 à 8, caractérisé par le fait que les activités antagonistes se font sur une plage de température allant de $0,5$ à $35\,°C$, en particulier de 6 à $15\,°C$.

10. Procédé selon au moins l'une des revendications précédentes 1 à 9, caractérisé par le fait que l'on met en oeuvre des bactéries antagonistes (IMET 11424, IMET 11425, IMET 11426, IMET 11427, IMET 11428) et/ou des champignons antagonistes (IMET 43920, IMET 43921, IMET 43922, IMET 43923, IMET 43924) contenant $10^4$ à $5 \times 10^{10}$ cfu/ml ou g (unités formant une colonie/ml ou g).

11. Procédé selon au moins l'une des revendications précédentes 1 à 10, caractérisé par le fait que l'on met en application 10à 500 ml ou g des formes d'application pour 100 kg de semences.